# EUROPÄISCHE PATENTSCHRIFT

(11) **EP 2 056 415 B1**
(45) Veröffentlichungstag und Bekanntmachung des Hinweises auf die Patenterteilung: **26.11.2014**
(21) Anmeldenummer: 08167391.5
(22) Anmeldetag: 23.10.2008
(51) Int. Cl.: H02G 1/12

(54) **Abisolierzange**
Stripping pliers
Pince à dénuder

(30) Priorität: 02.11.2007 DE 202007015348 U
(43) Veröffentlichungstag der Anmeldung: 06.05.2009
(73) Patentinhaber: Weidmüller Interface GmbH & Co. KG, 32758 Detmold (DE)
(72) Erfinder: Storm, Siegfried, 33189, Schlangen (DE); Heggemann, Christian, 32758, Detmold (DE); Hetland, Detlev, 32760, Detmold (DE); Hanning, Günther, 32758, Detmold (DE); Köster, Thomas, 33189, Schlangen (DE); Wedler, Andreas, 32756, Detmold (DE)
(74) Vertreter: Dantz, Jan Henning

(56) Entgegenhaltungen:
- EP-A- 0 145 049
- WO-A-91/06997
- DE-C1- 4 420 050
- DE-C1- 19 512 132
- US-A- 3 915 037

## Beschreibung

Die vorliegende Erfindung betrifft eine Abisolierzange gemäß dem Oberbegriff des Anspruchs 1.

Eine gattungsgemäße Abisolierzange ist aus der DE 195 12 32 C1 bekannt. Die dort gezeigte und beschriebene Konstruktion hat sich in der Praxis durchaus bewährt. Dabei ist die Abisolierzange so ausgebildet, dass eine Zugstange in Zangenmaullängsrichtung verschiebbar ist und zwei Abisolierorgane an der Zugstange befestigt sind, um sich mit dieser zu bewegen und dabei die Isolationsschicht von einem Kabel abzuziehen. Nachteilig an dieser Abisolierzange ist, dass für verschiedene Kabel- bzw. Isolierschichtdicken eine andere Zange mit anderes dimensionierten Abisolierschneiden verwendet werden muß, um ein Durchtrennen des Kabels bei zu großer Einschneidtiefe zu vermeiden oder weil im umgekehrten Fall bei zu geringer Einschneidtiefe in die Isolierung das Kabel nicht abisoliert werden kann.

Die DE 20 2004 014 801 U1 löst diese Problematik zumindest teilweise dadurch, dass für leicht variierende Isolierschichtdicken eine Federung der Abisoliermesser Verwendung findet. Bei stark unterschiedlichen Isolierschichtdicken schafft diese Lösung aber keine Abhilfe.

Die US 6,910,401 offenbart eine Abisolierzange mit einer Schneideeinheit, die zwei drehbar montierte Arme beinhaltet, welche gegeneinander federgespannt sind und an ihren beiden Enden Schneidelemente tragen, wobei die Schneideeinheit zwischen Klemmkrallen aufgenommen ist und sich mit diesen bewegt. Mit dieser Schneideeinheit verbunden ist eine Ziehstange und ein Klemm- und Ziehmechanismus. Die Verbindung zwischen den drehbar montierten Armen ist ein rohrförmiges Drehlager. Dadurch sind die beiden Arme zwar gegeneinander verschwenkbar, aber trotzdem fest miteinander als Einheit verbunden. In diesem Drehlager ist eine Nadel aufgenommen, die die Schneideeinheit mit der Ziehstange verbindet. Nachteilig bei dieser Bauweise ist, dass die Schneideeinheit nur komplett aus der Zange entnommen werden kann und der Ausbau der Schneideeinheit aufwändig ist, da zusätzlich die Nadel aus dem Drehlager entnommen werden muss. Zudem hat sich die Nadel als Befestigungsmittel für die Schneideeinheit an der Zugstange als weniger geeignet erwiesen.

Der Erfindung liegt die Aufgabe zugrunde, eine Abisolierzange zu entwickeln, die für die Abisolierung von Kabeln bei unterschiedlichsten Isolierschichtdicken geeignet ist.

Diese Aufgabe wird durch eine Abisolierzange mit den Merkmalen des Anspruchs 1 gelöst.

Mit der erfindungsgemäßen Abisolierzange ist ein leicht durchzuführendes Auswechseln der einzelnen Messerhalter ermöglicht. Dadurch können bei einem Defekt an einem der auf einem Messerhalter angebrachten Teile diese einfach und schnell aus der Zange entnommen werden.

Für Kabel mit unterschiedlichen Isolierschichtdicken braucht nur eine Zange angeschafft werden, man muss lediglich Messerhalter mit unterschiedlichen Abisoliermessern bereithalten.

Durch das als offene Drei mit Hinterschneidungen ausgebildete Ende der Zugstange, welche die Hinterschnitte in den Enden der Messerhalter hintergreifen, ist ein einfacher Ein- und Ausbau der Messerhalter aus der Abisolierzange durch einfaches Schwenken der Messerhalter in eine bestimmte Position ermöglicht.

Gemäß einer bevorzugten Ausbildung weist der schwenkbare Handhebel an seinem zangenkopfnahen Ende ein Schneidmesser auf, das zusammen mit einem an der Gehäuseschale angebrachten Schneidmesser eine Schneidvorrichtung bildet. Dadurch kann die Abisolierzange zusätzlich zum Durchtrennen von Kabeln genutzt werden.

Durch den schwenkbar an der Gehäuseschale angeordneten Sperrhebel ist ein unbeabsichtigtes Durchtrennen eines unbeabsichtigt in die Schneidvorrichtung geratenen Kabels wirksam verhindert.

Weitere vorteilhafte Ausbildungen der Erfindung sind in den Unteransprüchen gekennzeichnet.

Nachfolgend werden Ausführungsbeispiele anhand der beigefügten Zeichnungen beschrieben. Es zeigen:
- Fig. 1, 2: eine Seitenansicht einer Ausführungsform der Abisolierzange mit abgenommenem Seitenteil in zwei Betätigungsstellungen,
- Fig. 3: eine perspektivische Ansicht einer Ausführungsform der Abisolierzange mit aufrastbarer Griffschale,
- Fig. 4: eine perspektivische Ansicht eines Messerhalters,
- Fig. 5: eine perspektivische Ansicht eines Leiteranschlags,
- Fig. 6: eine perspektivische Explosionsansicht des Leiteranschlags,
- Fig. 7: eine perspektivische Detailansicht einer Verzahnung des Messerhalters und des darin eingreifenden Leiteranschlags,
- Fig. 8, 9: eine Schnittansicht der Verzahnung bzw. Nichtverzahnung des Leiteranschlags mit dem darunter befindlichen Messerhalter,
- Fig. 10: eine perspektivische Ansicht eines Auswerfers, montiert an dem Messerhalter,
- Fig. 11: eine perspektivische Detailansicht des Auswerfers,
- Fig. 12: eine perspektivische Detailansicht einer Ausführungsform der Abisolierzange mit einer Zugstange und einem Teilabisolieran-schlag,
- Fig. 13, 14: eine perspektivische Detailansicht des Teilabisolieranschlag in zwei Betätigungsstellungen,
- Fig. 15: eine perspektivische Detailansicht einer weiteren Ausführungs-form der Abisolierzange mit Zugstange und einem Einstellrad,
- Fig. 16, 17: eine perspektivische Detailansicht des Einstellrades in zwei Betätigungsstellungen,
- Fig. 18: eine perspektivische Detailansicht einer Klemmbacke mit einem Stellschieber,
- Fig. 19: eine perspektivische Detailansicht des Stellschiebers,
- Fig. 20-23: perspektivische Detailansichten einer Ausführungsform der Abisolierzange bei der Entnahme der Messerhalter,

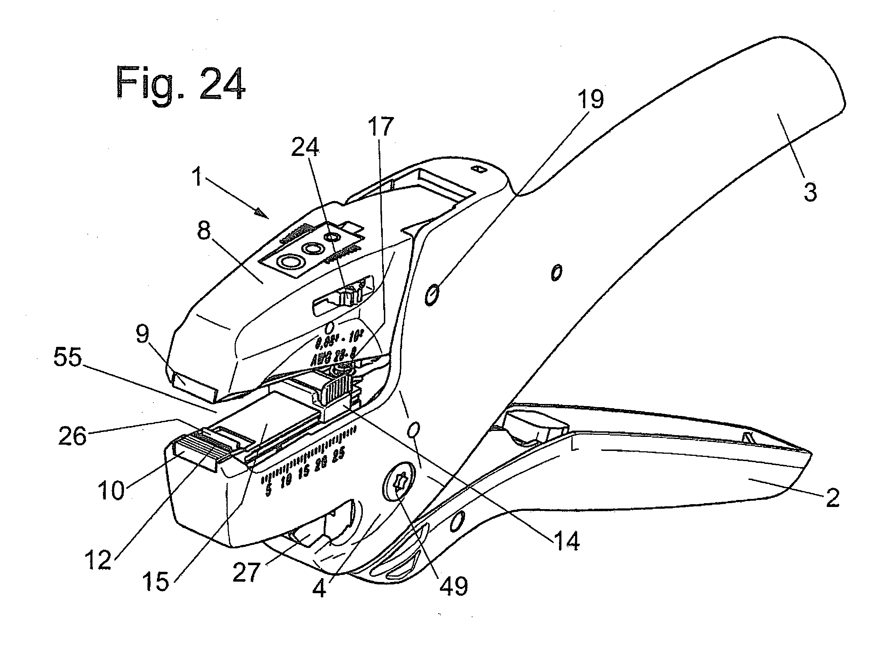

- Fig. 24: eine perspektivische Ansicht einer Ausführungsform der Abisolierzange im fertig montierten Zustand,
- Fig. 25: eine Seitenansicht einer weiteren Ausführungsform der Abisolierzange mit abgenommenem Seitenteil,
- Fig. 26a-c: perspektivische Detailansichten einer an der Abisolierzange angeordneten Schneidvorrichtung mit einem Sperrhebel,
- Fig. 27: eine Seitendetailansicht der in Fig.25 gezeigten Ausführungs-form der Abisolierzange mit alternativ ausgebildeten Teilabisolieranschlag,
- Fig. 28: eine perspektivische Detailansicht des Teilabisolieranschlags aus Fig. 27,
- Fig. 29: eine Seitendetailansicht einer Ausführungsform der Abisolierzange mit alternativ ausgebildeten Teilabisolieranschlag,
- Fig. 30: eine perspektivische Detailansicht des Teilabisolieranschlags aus Fig. 29,
- Fig. 31: eine perspektivische Detailansicht eines Teilabisolieranschlags aus Fig. 30 mit einem Dämpfungsglied,
- Fig. 32: eine perspektivische Ausschnittsansicht einer weiteren Ausführungsform der Abisolierzange mit alternativ ausgebildeten Teilabisolieranschlag,
- Fig. 33: eine perspektivische Detailansicht des Teilabisolieranschlags aus Fig. 32.

In der nachfolgenden Figurenbeschreibung beziehen sich Begriffe wie oben, unten, links, rechts, vorne, hinten usw. ausschließlich auf die in den jeweiligen Figuren gewählte beispielhafte Darstellung und Position der Zange. Diese Begriffe sind nicht einschränkend zu verstehen, d.h. in verschiedenen Arbeitsstellungen oder durch spiegelsymmetrische Auslegung oder dergleichen können sich diese Bezüge ändern.

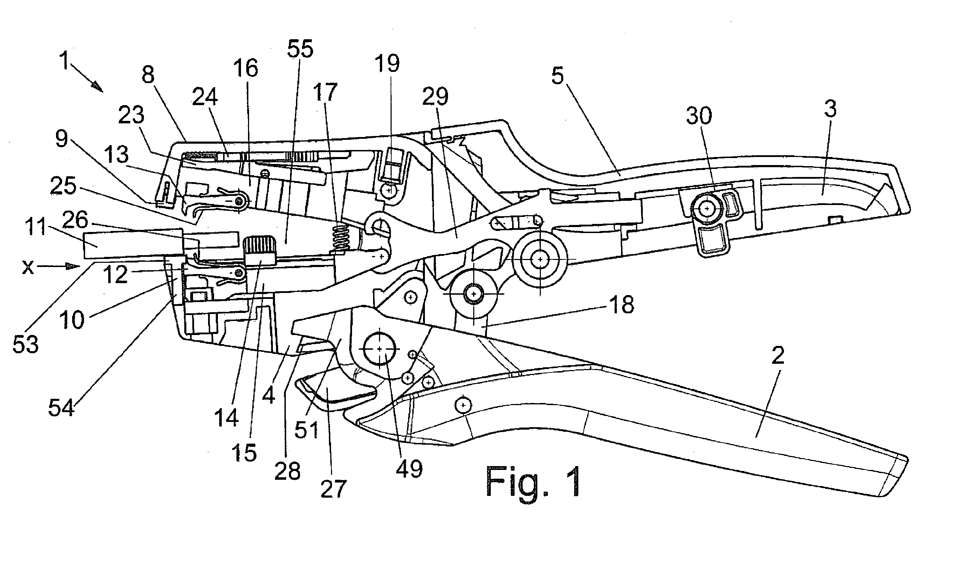

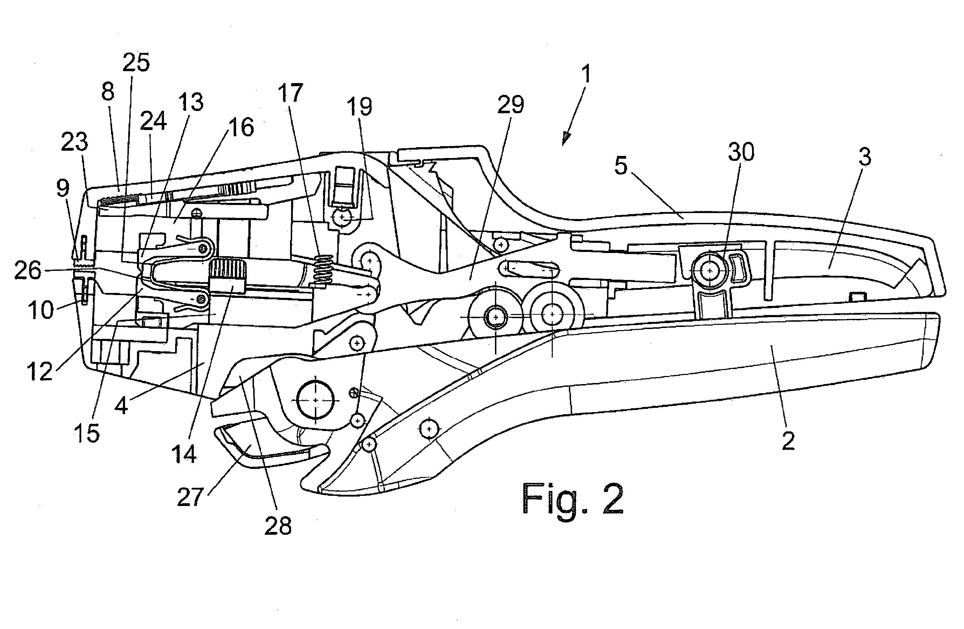

Die Fig. 1 und 2 zeigen eine Abisolierzange 1 mit zwei Handhebeln 2 und 3. Der eine Handhebel 3 ist einstückig an einer Gehäuseschale 4 ausgebildet, wohingegen der andere Handhebel 2 schwenkbar an der Gehäuseschale 4 gelagert ist.

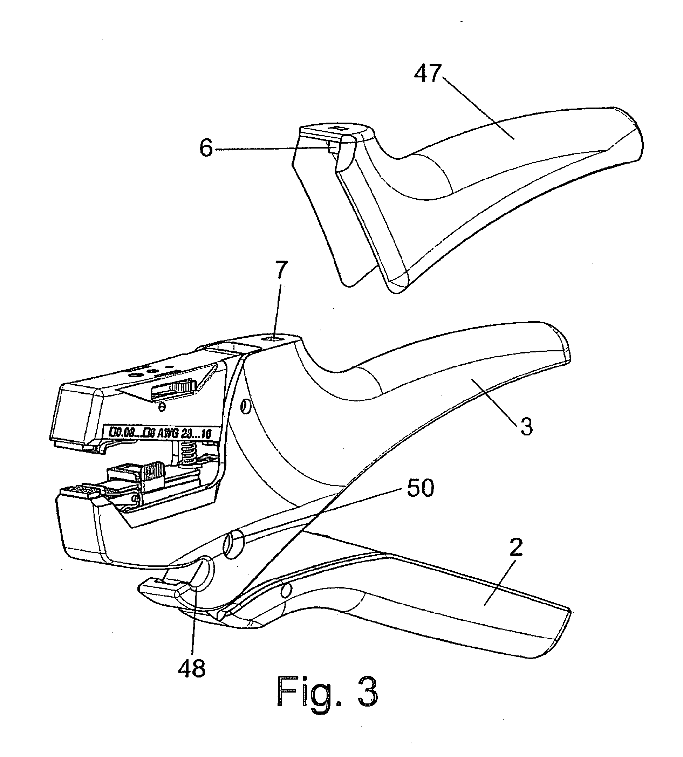

Auf die Handhebel 2, 3 ist eine Griffschale 5 abnehmbar aufgestülpt, die je nach Handgröße des Benutzers durch eine groß- bzw. kleinvolumigere Griffschale austauschbar ist und damit eine Griffweitenmodifzierung der Abisolierzange ermöglicht. In Fig. 3 ist neben einer Ausbildungsform der Abisolierzange beispielhaft für die Handhebel 2 und 3 eine Ersatzgriffschale 47 für den oberen Handhebel 3 abgebildet, der den Konturen des Handhebels 3 angepasst ist und den Handhebel 3 von vier Seiten umgreift. Denkbar wäre auch lediglich eine dem Handhebelrücken angepasste Schiene als Griffschalenaufsatz oder eine u-förmige Griffschale, die sowohl den Handhebelrücken als auch die Seitenbereiche des Handhebels 3 bedeckt. Als weitere Alternative käme auch eine auf die erste Griffschale 5 aufstülpbare Ersatzgriffschale 47 zur Vergrößerung der Griffweite in Frage, so dass die den Handhebel abdeckende Griffschale 5 auf dem Handhebel verbleibt. Bevorzugt verfügt die Griffschale 5 über mindestens einen Rastzahn 6, der in eine Einrastöffnung 7 im Handhebel 3 einrastbar ist, um der Griffschale 5 einen stabilen und sicheren Halt auf dem Handhebel 3 zu gewähren.

Der verschwenkbare Handhebel 2 ist an der Gehäuseschale 4 schwenkbar gelagert, wobei die Lagerung über einen Lagerbolzen 49 erfolgt, der durch Bohrungen 50 in den Seitenwänden 51 des Handhebels 2 und in den Seitenwänden der Gehäuseschale 4 hindurchragt. Ein Teil der Seitenwände 51 des Handhebels 2, insbesondere der Teil um die Bohrungen herum, liegt an den Innenwänden der Gehäuseschale 4 an. Dadurch wird der Handhebel 2 in der Gehäuseschale 4 geführt. Der verschwenkbare Handhebel 2 weist an seinem linken Ende eine Schneidvorrichtung mit einem Schneidmesser 27 auf, das sich beim Verschwenken des Handhebels auf den anderen Handhebel zu auf ein an der Gehäuseschale 4 angebrachtes Schneidmesser 28 zu bewegt, so dass ein an dieser Stelle eingelegtes Kabel durchtrennt werden kann. Die Gehäuseschale 4 ist an dieser Stelle bevorzugt als Rundmaul 48 zum Einlegen eines durchzutrennenden Kabels geformt.

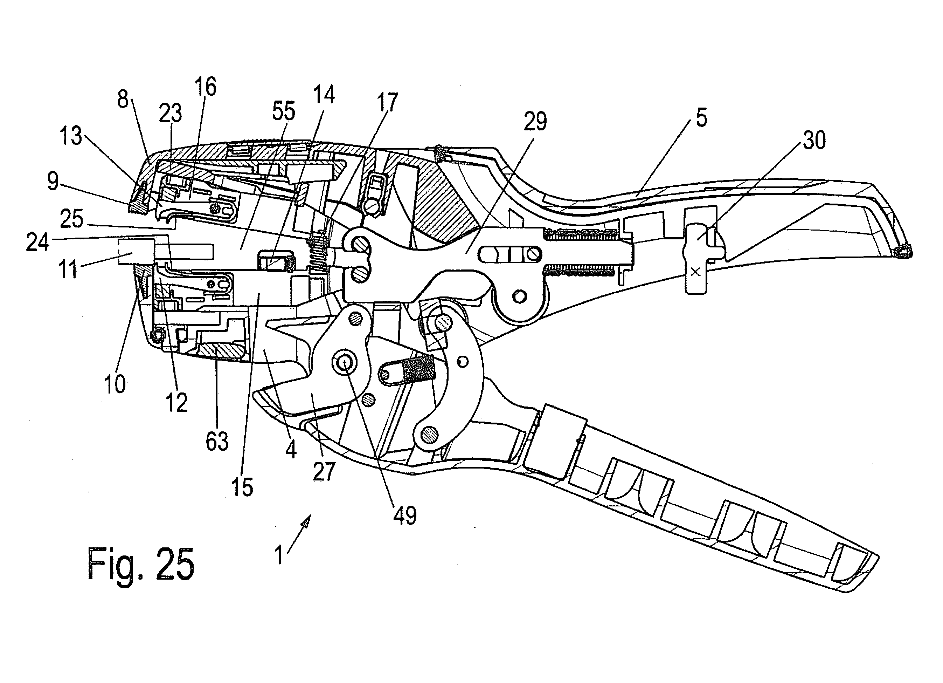

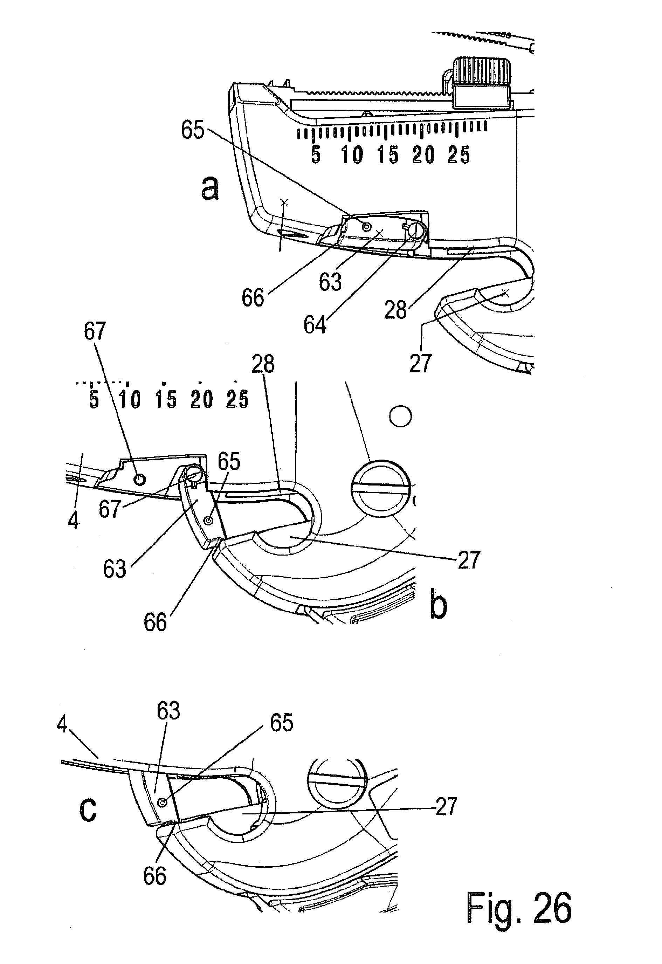

In einer in dem Figuren 25 bis 26C gezeigten besonderen Ausführungsform ist an der Gehäuseschale 4 vor der Schneidvorrichtung bzw. vor der Öffnung des Rundmauls 48 ein Sperrhebel 63 angeordnet. Dieser Sperrhebel ist an seinem der Schneidvorrichtung zugewandten Ende über eine Drehachse 64 vor der Öffnung des Rundmauls 48 an dem Gehäuse 4, bevorzugt neben dem Schneidmesser 28, angebracht und dadurch drehbar an dem Gehäuse gelagert. Zur Arretierung des Sperrhebels 63 an dem Gehäuse 4 ist der Sperrhebel 63 mit einem Rastnocken 65 ausgebildet, der zur Gehäuseseitenfläche 4 aus dem Sperrhebel 63 vorsteht und in einer Aussparung 67 an der Seitenfläche des Gehäuses 4 einrastbar ist. Die Figuren 26B und 26C zeigen den Sperrhebel 63 in einer Sperrstellung, bei der das Rundmaul 48 durch den Sperrhebel 63 versperrt wird. Dabei wird die Rundmaulöffnung 48 durch den Sperrhebel 63 versperrt, wobei eine Stirnseite 66 des Sperrhebels 63 an der gegenüber liegenden Seite des Rundmauls 48 arretiert ist. Alternativ ist auch ein Anbringen der Drehachse 64 des Sperrhebels 63 auf der gegenüber liegenden Seite des Rundmauls 48 denkbar. Zur Verhinderung eines unbeabsichtigten Trennens oder Durchschneidens eines elektrischen Leiters, welcher versehentlich in die Schneidvorrichtung geraten ist, wird der Sperrhebel 63 zur Versperrung des Rundmauls 48 aus seiner längs an das Gehäuse 4 angeschmiegten Neutralposition zur gegenüber liegenden Seite des Rundmauls 48 gedreht. Dadurch ist ein Einlegen eines Kabels in das Rundmaul 48 verhindert, so dass bei einer Betätigung des verschwenkbaren Handhebels 2 für einen Abisoliervorgang zwar die beiden Schneidmesser 27, 28 aufeinander zu bewegt werden, dabei aber kein Kabel durchtrennt werden kann.

An der Gehäuseschale 4 ist eine Klemmbacke 8 schwenkbar gelagert, wobei die Lagerung über einen Lagerbolzen 19 erfolgt, der durch Bohrungen 20, 21 in den Seitenwänden 51 der Klemmbacke 8 und in der Gehäuseschale 4 hindurchragt. Ein Teil der Seitenwände 51 der Klemmbacke 8, insbesondere der Teil um die Bohrungen 20 herum, liegt an den Innenwänden 52 der Gehäuseschale 4 an. Dadurch wird die Klemmbacke 8 in der Gehäuseschale 4 geführt.

Am vorderen Ende der Klemmbacke 4 ist ein Klemmbackeneinsatz 9 befestigt. Der Klemmbackeneinsatz 9 besteht aus einem flächigen Andruckstück 53 und einem senkrecht auf der Fläche stehenden Stift 54, der in die Spitze der Klemmbacke 8 hineinragt und dort kraft- oder formschlüssig gehalten wird. Diesem Klemmbackeneinsatz 9, insbesondere dessen Andruckstück 53, gegenüber ist ein weiterer Klemmbackeneinsatz 10 an der Spitze des Gehäuseschalenteils 4, der eine Zangenmaullippe bildet, in gleicher Weise befestigt. Die Klemmbacke 8 und ein vorderes, in den Fig. 1, 2 linke Teilstück der Gehäuseschale 4 bilden zusammen das Zangenmaul 55 der Abisolierzange.

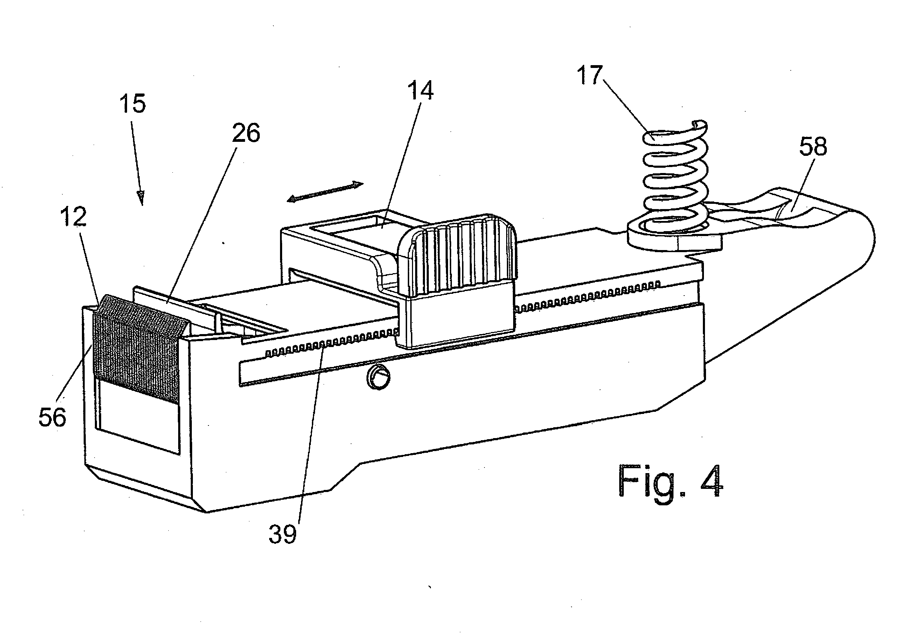

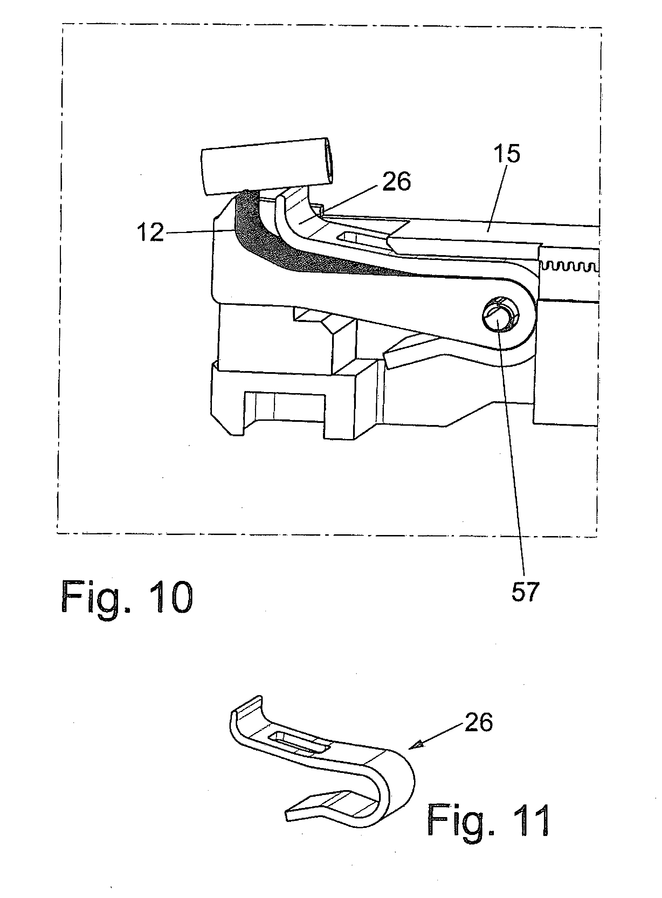

An der Unterseite der Klemmbacke 8 und der Oberseite des vorderen Gehäuseteilstücks 4 ist in Leitereinschubrichtung x hinter den Klemmbackeneinsätzen 9, 10 jeweils ein Messerhalter 15 bzw. 16 angeordnet. Wie in den Fig. 1 und 4 zu sehen ist, ragt auf beiden Messerhaltern 15, 16 an deren vorderen Enden jeweils ein Abisoliermesser 12, 13 hervor. Die Position der Abisoliermesser 12, 13 auf den Messerhaltem 15,16 in Leitereinschubrichtung x ist dabei so gewählt, dass die Messerkanten beim Gebrauch der Zange aufeinandertreffen. Diese Abisoliermesser können als massive Klinge oder, wie in Fig. 4 gut zu erkennen ist, bevorzugt als Lamellensatz 56 ausgebildet sein. Vorteil dieser Ausbildung ist eine bessere Anpassung der Lamellen an die Kontur eines abzuisolierenden Kabels. Mauleinwärts ist auf einem der Messerhaltern 15, 16, bevorzugt auf beiden jeweils ein Auswerfer 25, 26 angebracht, der ein Festsetzen von Isolationsresten auf den Abisoliermessem 12, 13 verhindert. Der untere Auswerfer 25 ist beispielhaft in den Fig. 10 und 11 dargestellt. Er ist als Feder ausgeführt. Bevorzugt ist er von s-förmiger Gestalt, wobei das eine Ende mit dem auszuwerfenden Abisolierstück in Kontakt kommt und das andere Ende um einen Bolzen 57 herum gelegt ist, an dem bzw. der auch das Abisoliermesser 12 gemäß der in Fig. 1 dargestellten Ausführungsform befestigt ist.

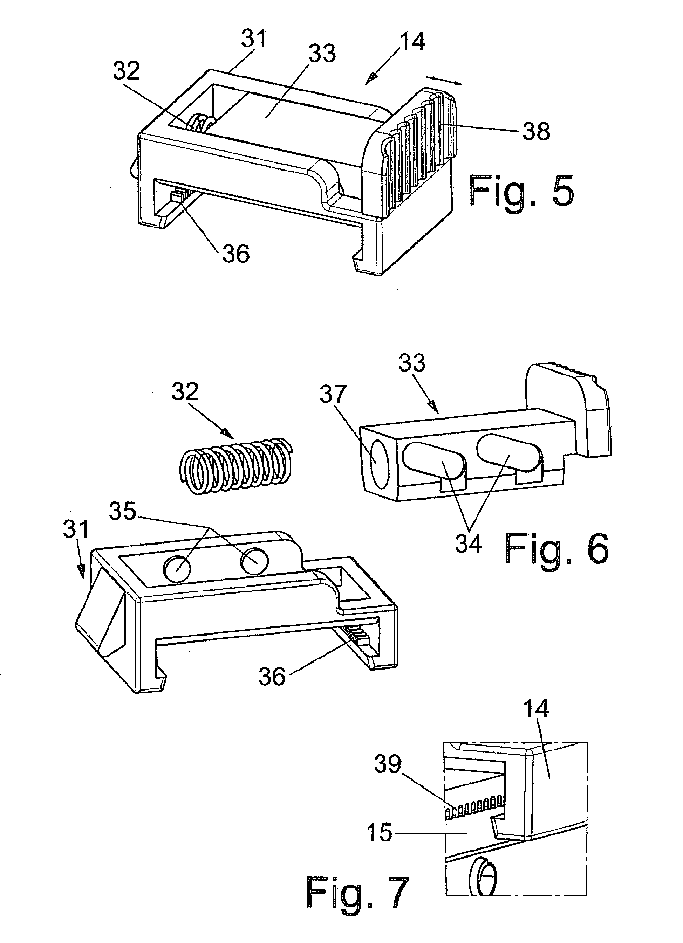

Weiter mauleinwärts von diesen ist auf dem unteren, in der Gehäuseschale 4 befindlichen Messerhalter 15 ein Leiteranschlag 14 verschiebbar montiert, um verschiedene Abisolierlängen zu ermöglichen. Der Leiteranschlag 14 ist, wie in den Fig. 5-7 zu sehen ist, zusammengesetzt aus einem Anschlag 31, einem Anschlagrastelement 33 und einer Druckfeder 32. Das Anschlagrastelement 33 wird dabei über schräg verlaufende Langlöcher 34, in die jeweils eine Ausstülpung 35 eingreift, welche sich an den Innenlängsseiten des Anschlags 31 befinden, in dem Anschlag 31 geführt.

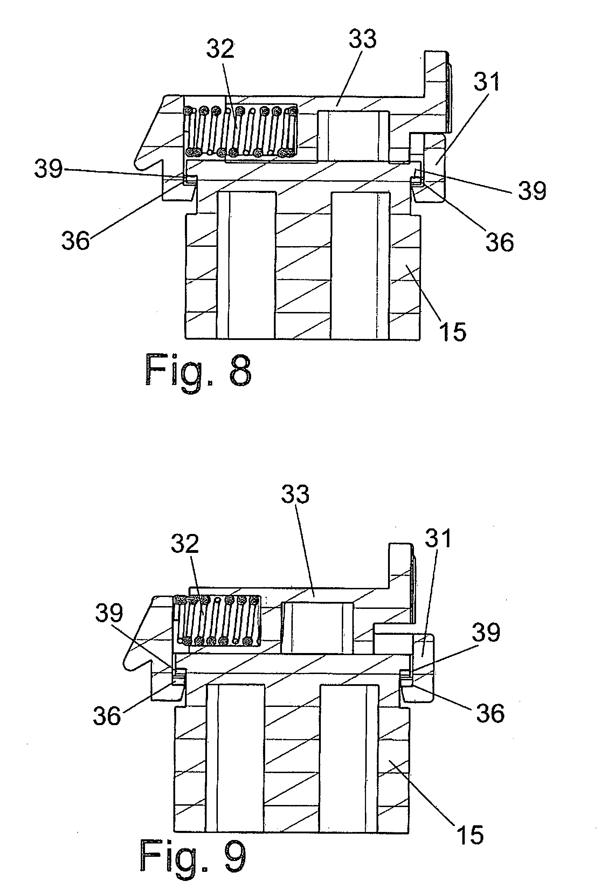

Die Funktionsweise des Leiteranschlags 14 ist in den Fig. 5-9 dargestellt. Bei Betätigen des Leiteranschlags 14 durch Drücken auf eine Betätigungsfläche 38 am Anschlagsrastelement 33 wird das Anschlagsrastelement 33 entgegen der Druckkraft einer zwischen Anschlag 31 und dem entgegengesetzten Ende des Anschlagrastelements 33 befindlichen Druckfeder 32 seitlich in die Abisolierzange hineingedrückt, dabei aufgrund der Führung des Anschlagrastelements 33 in dem Anschlag 31 durch die Langlöcher 34 und Ausstülpungen 35 der Anschlag 31 nach unten gedrückt und dadurch eine am Anschlag 31 angebrachte Verzahnung 36 aus einer an den Längsseiten des Messerhalter 15 entlang laufenden Verzahnung 39 losgelöst. Sodann lässt sich der Leiteranschlag längs des Messerhalters verschieben. Lässt man anschließend die Betätigungsfläche 38 am Anschlag 31 wieder los, drückt die Druckfeder 32 das Anschlagrastelement 33 wieder in die Ausgangsstellung im Anschlag zurück. Dabei wird der Anschlag 31 nach oben angehoben und die Verzahnung 36, 39 von Anschlag 31 und Messerhalter 15 greift wieder ineinander und setzt somit den Leiteranschlag 14 auf dem Messerhalter 15 wieder fest.

Um eine exakte Einstellung des Leiteranschlags für eine gewünschte Abisolierlänge zu unterstützen, ist auf der Gehäuseschale 4 im Bereich des Messerhalters 15, 16 parallel zu diesem eine Skala aufgetragen. Bevorzugt besteht die Skala aus Millimeterstrichen, andere Einheiten sind selbstverständlich ebenfalls denkbar. Bevorzugt ist die Skale unmittelbar unter- oder oberhalb des Messerhalters 15, 16 auf der Gehäuseschale 4 platziert.

Im Zangenmaul 55 sitzt auf dem unteren Messerhalter 15 eine Druckfeder 17, die gegen den oberen Messerhalter 16 drückt und der durch einen Benutzer ausgeübte Kraft auf das Zangenmaul 55 entgegenwirkt und beim Loslassen der Handhebel 2, 3 das Zangenmaul 55 wieder öffnet.

Die Messerhalter 15, 16 sind an ihrem in Fig. 1 rechten Ende in das Maul einer Zugstange 29 herausnehmbar eingehakt. Dieses Maul ist in Form einer zu den Messerhaltern hin offenen Drei ausgebildet, deren Enden in eine in den Endstücken der Messerhalter dafür vorgesehene Öffnung eingreift und die Messerhalter auf diese Weise sicher festhält, so dass bei einer horizontalen Bewegung der Zugstange die Messerhalte mitbewegt werden. Im vorderen Bereich sind die Messerhalter 15, 16 durch die Innenseiten des vorderen Teilstücks der Gehäuseschale 4 bzw. den Innenseiten der Klemmbacke geführt.

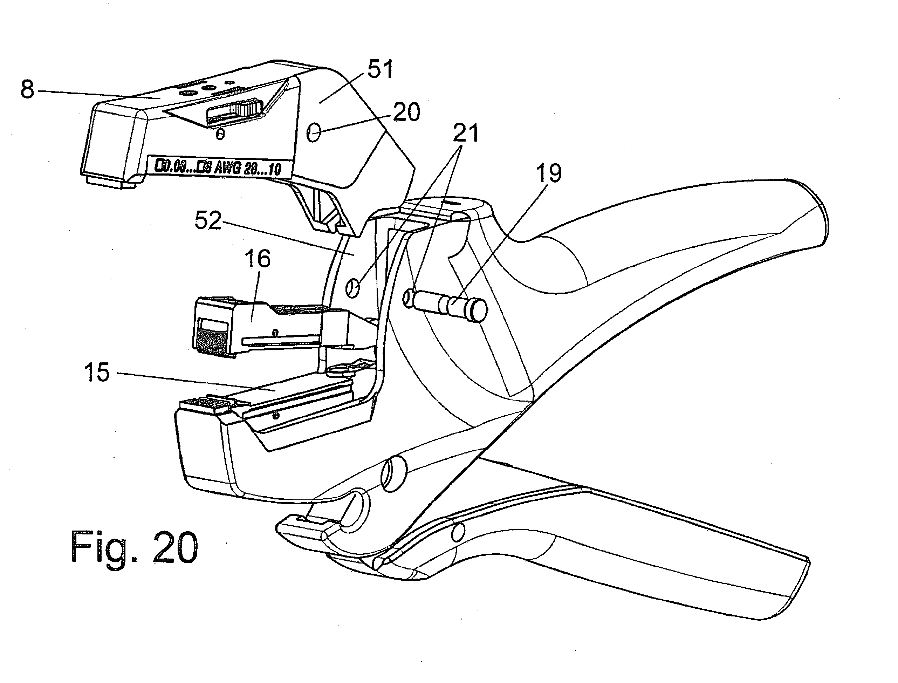

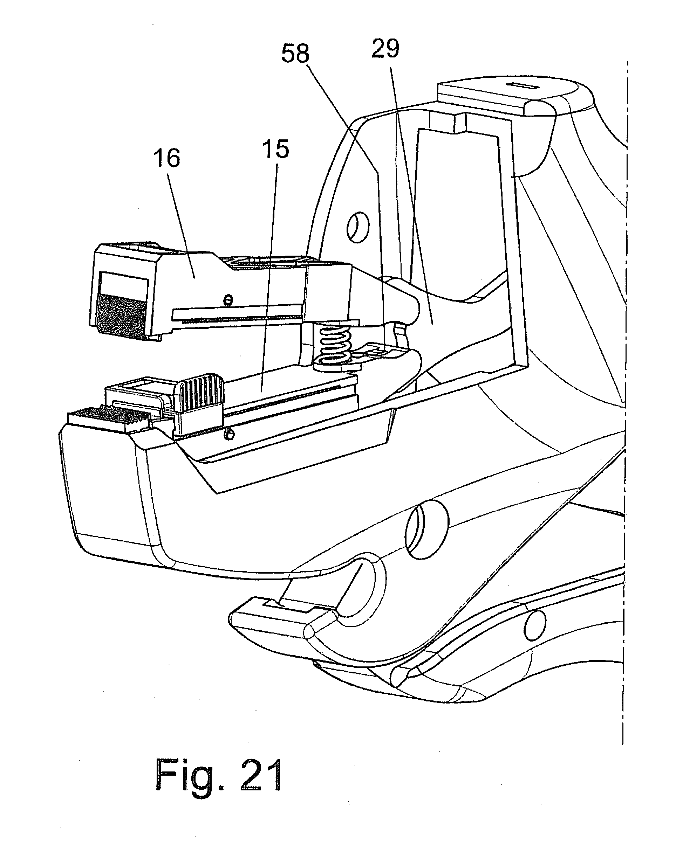

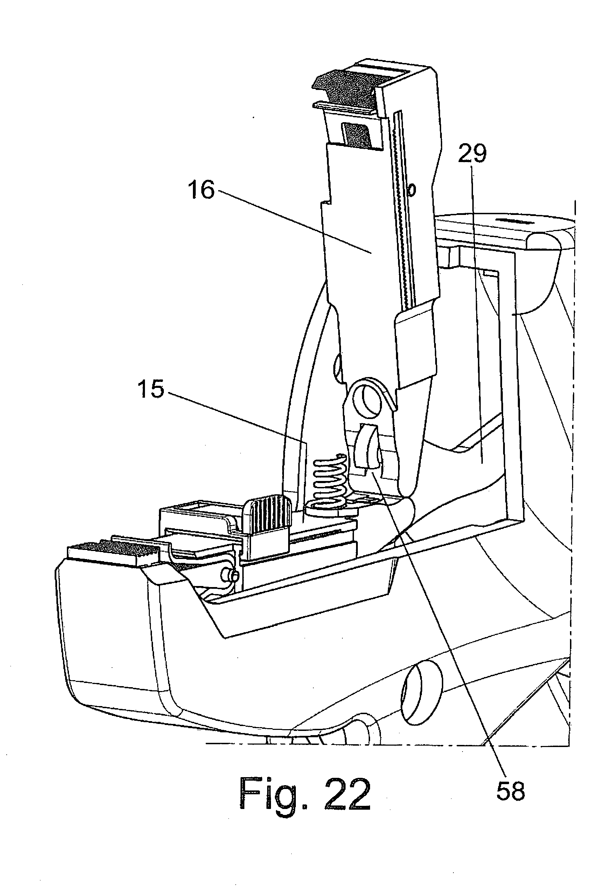

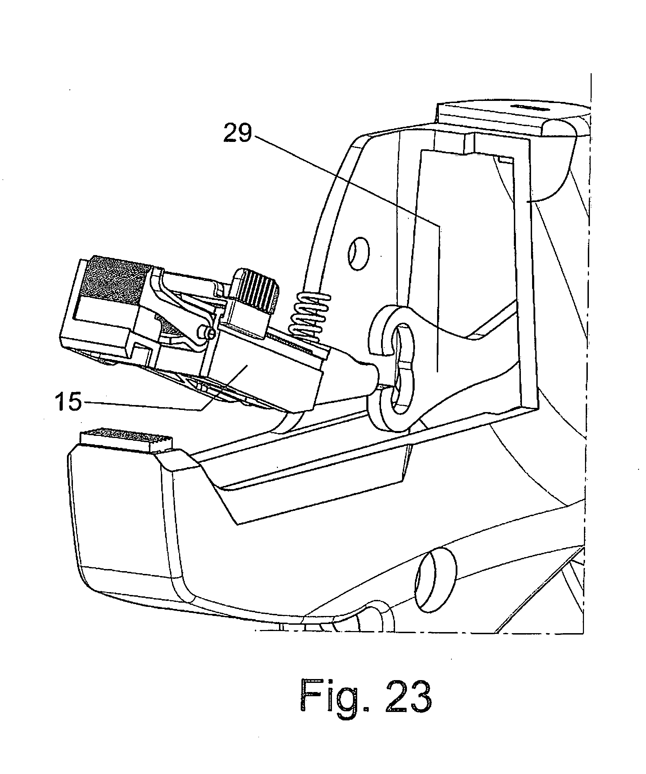

Um die Messerhalter 15, 16 auszuwechseln, muss, wie in den Fig. 20-23 dargestellt, zunächst der Lagerbolzen 19, der die Klemmbacke 8 arretiert, aus der Lagerstelle 46 und die Klemmbacke 8 aus der Gehäuseschale entfernt werden. Anschließend schwenkt man den oberen Messerhalter 16 nach oben, um ihn aus der oberen Gabel des Zugstangenmauls herauszunehmen. Sobald der obere Messerhalter 16 entfernt ist, kann der untere in der Gehäuseschale liegende Messerhalter 15 leicht nach oben geschwenkt und aus der aus der unteren Gabel des Zugstangenmauls herausgenommen werden. Die Messerhalter können anschließend durch neue oder solche mit anderer Messerform ersetzt werden.

Die Zugstange 29 läuft im wesentlichen horizontal durch das Innere der Abisolierzange. Sie ist horizontal verschiebbar gelagert. An ihrem zum Zangenmaul zeigenden Ende befindet sich das bereits erwähnte Maul in Form einer offenen Drei, in das die Messerhalter eingehakt sind.

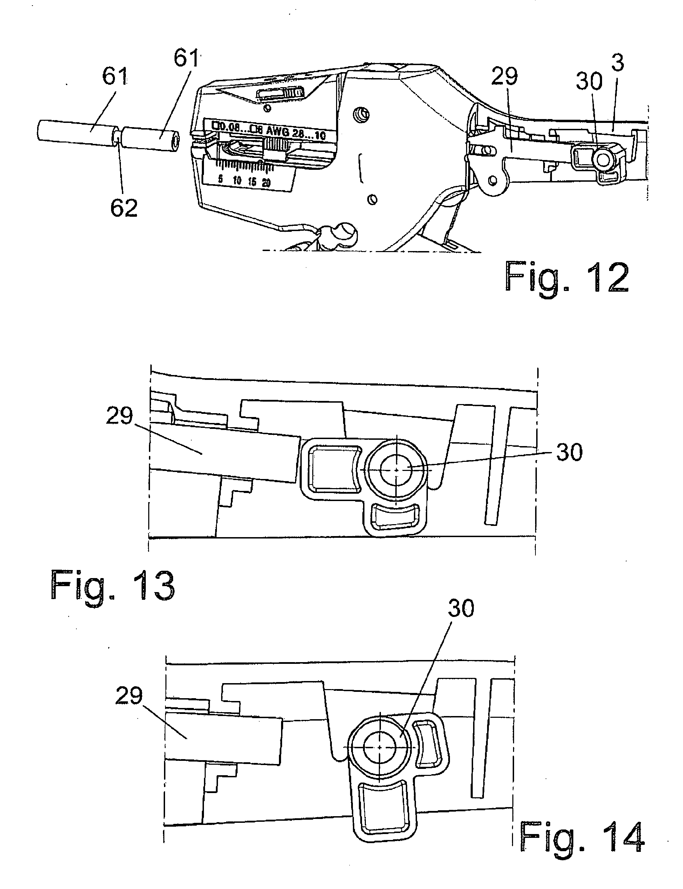

Hinter dem von den Messerhaltern (15, 16) abgewandten Ende der Zugstange ist in einer besonderen Ausführungsform der Abisolierzange ein Teilabisolieranschlag 30 im Handhebel 3 befestigt. Eine Detailansicht des Teilabisolieranschlags 30 ist in den Fig. 12-14 dargestellt. Dieser ermöglicht eine Teilabisolierung 62 eines isolierten Drahtstückes 61. Er ist bevorzugt als L-Stück ausgebildet. Die Lagerung des Teilabisolieranschlag 30 befindet sich im L-Knick, so dass der Teilabisolieranschlag 30 wahlweise so eingestellt werden kann, dass die Zugstange 29 in ihrer Bewegung nach hinten durch den langen Schenkel des L-Stücks begrenzt wird und somit eine vollständige Abisolierung des Drahtstücks verhindert. In der anderen gezeigten Einstellmöglichkeit ist der Teilabisolieranschlag 30 von der Zugstange 29 so weggedreht, dass diese sich frei bewegen kann.

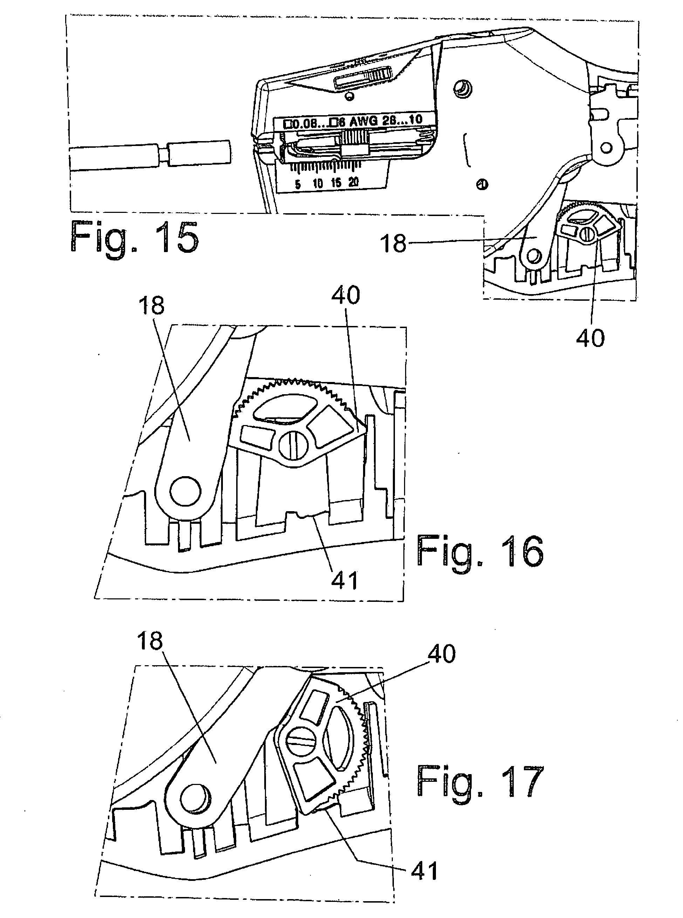

In einer anderen, in den Fig. 15-17 gezeigten, bevorzugten Ausführungsform wird die Bewegungsfreiheit der Zugstange 29 durch ein Einstellrad 40 begrenzt. Dieses Einstellrad 40 ist rechts neben dem Omegahebel, der unter anderem auch die Bewegung der Zugstange 29 steuert, oberhalb des Handhebels 2 drehbar gelagert. In der in Fig. 16 gezeigten Teilabisoliereinstellung begrenzt das Einstellrad 40 den Omegahebel 18 derart, dass die Zugstange 29 und damit auch die Messerhalter 15, 16 nur einen begrenzten Weg vollführen. Die Einstellung für die Vollabisolierung ist in Fig. 17 dargestellt. Hier ist das Einstellrad an eine unterhalb des Einstellrads vorhandene Kurvenleiste 41 arretiert und von dem Omegahebel abgewandt, dass dieser mehr Bewegungsfreiheit erhält und damit der Zughebel 29 und die Messerhalter 15, 16 den ganzen Weg vollführen können.

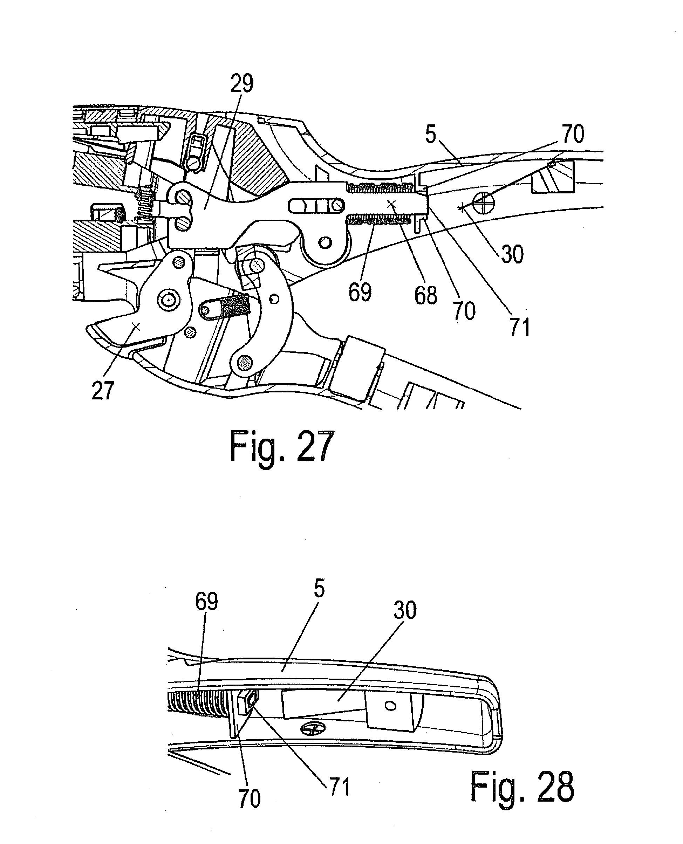

In einer weiteren, in den Figuren 27 und 28 gezeigten, bevorzugten Ausführungsform wird die Bewegungsfreiheit der Zugstange 29 durch einen als Blattfeder ausgebildeten Teilabisolieranschlag 30 begrenzt. Wie in der Detailansicht dieses Teilisolieranschlags 30 in Figur 28 zu erkennen ist, ist dieser ebenfalls im Handhebel frei befestigt. Die Blattfeder 30 ist mit einem hinteren, dem Zangenende zugewandten, Ende in dem Handhebel frei befestigt. Das vordere Ende der Blattfeder zeigt in Richtung eines Zugstangengendes 71, welches durch eine Öffnung in einem Anschlag 70, der im Handhebel 3 angeordnet ist, hindurchdrückt. Bevorzugt ist der hintere Zugstangenabschnitt 68 von einem Federelement 69 umfasst, das eine Abisolierbewegung der Zugstange in Richtung des Zangenendes entgegenwirkt, indem das eine Ende des Federelements 69 an dem Anschlag 70 anliegt und mit dem anderen Ende durch die Bewegung der Zugstange in Richtung des Anschlags zusammengedrückt wird. Dadurch trifft die Zugstange 29 beim Zusammendrücken der Zange nach Zurücklegen einer Strecke X auf den Teilisolieranschlag 1, durch dessen Erreichen angezeigt ist, dass der Teilabisoliervorgang abgeschlossen ist. Um einen vollen Abisoliervorgang durchzuführen, muss die Zugstange 29 weiter gegen die Blattfeder 30 gedrückt werden, so dass diese ausgelenkt wird.

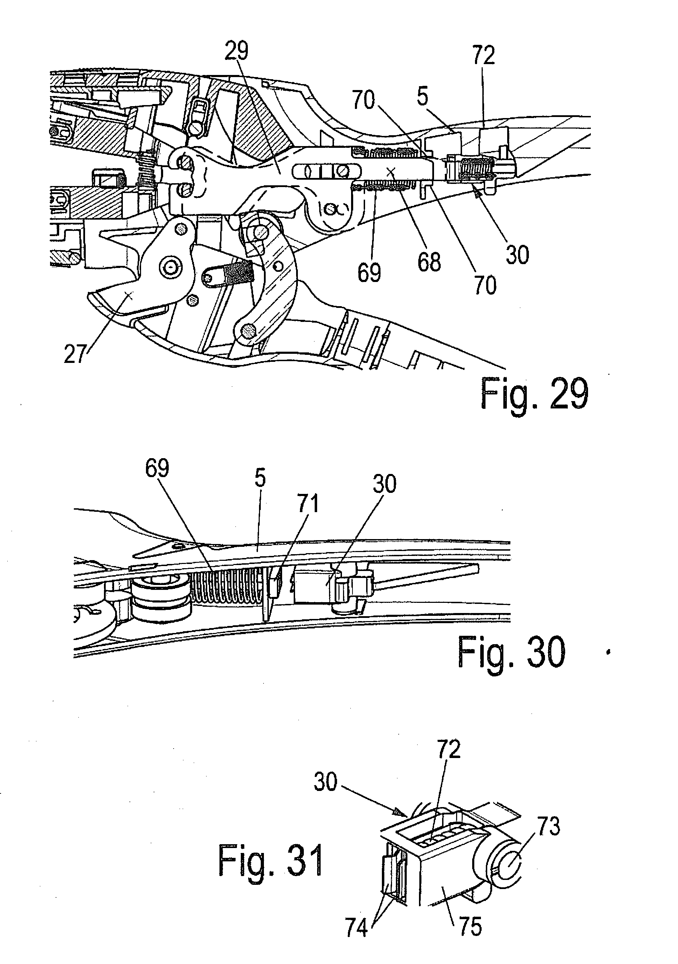

Gemäß einer weiteren besonderen Ausführungsform wird die Bewegungsfreiheit der Zugstange 29 durch einen Teilabisolieranschlag 30 begrenzt, welcher, wie in den Figuren 29 bis 31 gezeigt, in dem Handhebel 3 über eine Drehachse 73 drehbar befestigt ist. Der Teilabisolieranschlag 30 weist des Weiteren ein Gehäuse 75 auf, in dem ein Dämpfungsglied 72 gelagert ist, das aus einer Stirnseite 74 des Gehäuses herausragt und während eines Teilabisoliervorgangs auf die nach hinten geschobene Zugstange 29 trifft.

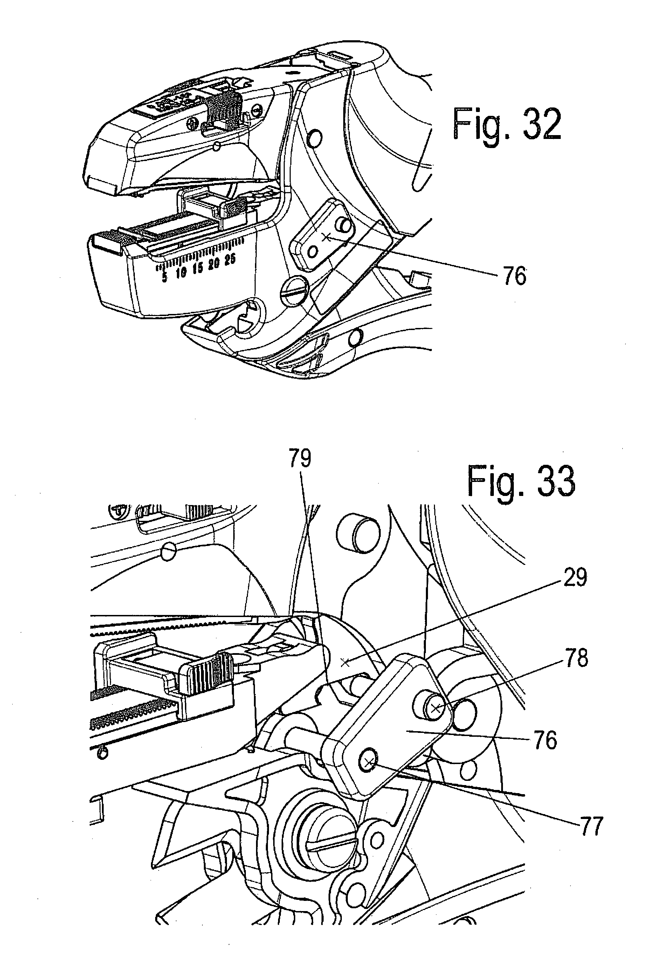

In einer nochmals anderen, in den Figuren 32 und 33 gezeigten bevorzugten Ausführungsform weist die Zugstange 29 eine Aussparung 79 auf, in die ein in einem Gehäuse 76 gefedert gelagerter Bolzen 78 eingreift. Das Gehäuse 76 wird mit einem Stift 77 am Gehäuse 4 der Abisolierzange fixiert. Auf diese Weise wird durch Eindrücken des Bolzens 78 in die Ausnehmung 79 die Bewegungsfreiheit der Zugstange 29 in Richtung der Zugstangenlängsachse auf die Länge der Ausnehmung 79 begrenzt. Dadurch wird erreicht, dass der elektrische Leiter lediglich teilabisoliert wird, das heißt die Isolation wird durchtrennt, aber der Abisolierrest verbleibt auf dem Leiter.

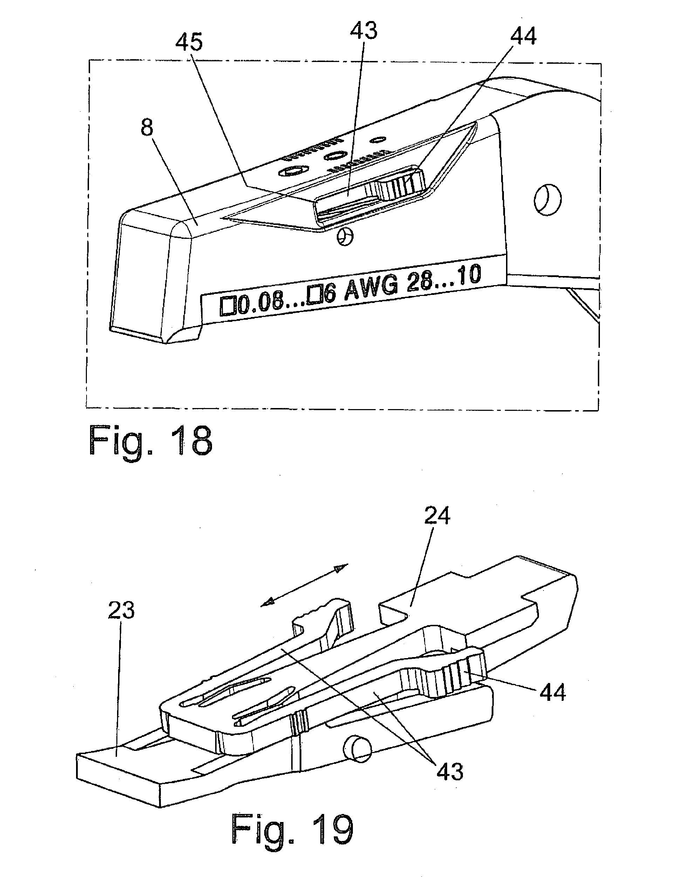

Wie in den Fig. 1 und 18 zu sehen ist, ist in der Klemmbacke 8 oberhalb des Messerhalters 16 ein Stellschieber 24 zur Höhenänderung des Messerhalters angeordnet. Dieser gleitet, wie in Fig. 19 gezeigt, auf einer Gleitplatte 23. Der Stellschieber 24 weist an seinen Seiten je einen federnden Schenkel 43 mit an den Enden geriffelten äußeren Berührungsflächen 44 auf, die durch Öffnungen 45 in den Seitenflächen der Klemmbacke 8 aus dieser herausragen und von einem Benutzer eingedrückt werden können, um den Stellschieber entlang der Längsachse der Klemmbacke zu verschieben. Der Stellschieber 24 ist in seinem vorderen Bereich flach ausgebildet und verdickt sich nach hinten.. Die federnden Schenkel des Stellschiebers verschmelzen am vorderen Ende mit dem Hauptkörper des Stellschieber und spreizen sich zum anderen Ende hin vom diesem weg. Der Hauptkörper des Stellschiebers 24 verjüngt sich dabei in seiner Breite im Bereich der Schenkellänge nach hinten, um ein Eindrücken der Schenkel auf den Hauptkörper zu zu ermöglichen. Der hintere Bereich des Stellschiebers 24 hat die gleiche Breite wie die darunter liegende Gleitplatte 23, nur das Endstück ist etwas schmaler ausgebildet. Schiebt man den Stellschieber 24 nach vom, d.h. in der Figur nach links, so wird die Gleitplatte und damit auch der an dieser anliegende Messerhalter 16 nach unten gedrückt. Damit ist ein Feinregulierung der Einschneidtiefe in den abzuisolierenden Draht möglich, wodurch auch Isolationsschichten von Kabeln mit Isolierschichten von unterschiedlichem Durchmesser exakt einschneidbar sind. Zur Kennzeichnung, in welche Richtung der Stellschieber für eine Isolierschicht mit einem bestimmten Durchmesser verschoben werden muss, ist auf der Klemmbacke 8, bevorzugt auf dem Rücken der Klemmbacke 8 eine Skala 59 und mehrere Ringsymbole 60 mit fortlaufend wachsendem Radius aufgetragen.

Bei der Benutzung der Abisolierzange wird beim Zusammendrücken der beiden Handhebel 2, 3 mit einer Hand der Handhebel 2 in Richtung des Handhebels 3 gedrückt. Dabei wird über einen Hebelmechanismus zunächst die Klemmbacke 8 nach unten gegen die Gehäuseschale 4 gedrückt. Dabei wird ein in die Zange eingelegtes Kabelstück 11 festgeklemmt. Gleichzeitig schneiden die Abisoliermesser 12, 13 der Messerhalter 15, 16 in die Kabelummantelung des Kabelstücks 12 ein. Drückt man die Zange weiter zu, wird über den Hebelmechanismus die Zugstange und mit ihr die im Zugstangenmaul eingehakten Messerhalter 15, 6 nach hinten gezogen, wodurch die Isolierung des Kabelstücks nach hinten von dem Kabeldraht abgezogen wird. Je nach Stellung des Teilabisolieranschlags wird die Isolierung ganz oder nur teilweise von dem Kabelstück abgezogen. Dabei wird der Auswerfer gespannt. Sobald der Benutzer die Zangenhebel 2, 3 wieder loslässt und das Kabel aus der Zange entnimmt, wird die Klemmbacke 8 durch die Druckfeder 17 zurück in die offene Stellung gedrückt, der Auswerfer entspannt sich und wirft dabei das abgetrennt Isolierstück aus dem Zangenmaul aus.

### Bezugszeichenliste

- 1: Abisolierzange
- 2: Handhebel
- 3: Handhebel
- 4: Gehäuseschale
- 5: Griffschale
- 6: Rastzahn
- 7: Einrastöffnung
- 8: Klemmbacke
- 9: Klemmbackeneinsatz
- 10: Klemmbackeneinsatz
- 11: Kabelstück
- 12: Abisoliermesser
- 13: Abisoliermesser
- 14: Leiteranschlag
- 15: Messerhalter
- 16: Messerhalter
- 17: Druckfeder
- 18: Omegahebel
- 19: Lagerbolzen
- 20: Bohrung
- 21: Bohrung
- 22: Federdruckstück
- 23: Gleitplatte
- 24: Stellschieber
- 25: Auswerfer
- 26: Auswerfer
- 27: Schneidmesser
- 28: Schneidmesser
- 29: Zugstange
- 30: Teilabisolieranschlag
- 31: Anschlag
- 32: Druckfeder
- 33: Anschlagrastelement
- 34: Langloch
- 35: Ausstülpung
- 36: Verzahnung
- 37: Federlager
- 38: Betätigungsfläche
- 39: Verzahnung
- 40: Einstellrad
- 41: Kurvenleiste
- 42: Einstellstück
- 43: Schenkel
- 44: Berührungsflächen
- 45: Öffnung
- 46: Lagerstelle
- 47: Ersatzgriffschale
- 48: Rundmaul
- 49: Lagerbolzen
- 50: Bohrungen
- 51: Klemmbackenseitenwand
- 52: Gehäuseschaleninnenwand
- 53: Andruckstück
- 54: Stift
- 55: Zangenmaul
- 56: Lamellensatz
- 57: Bolzen
- 58: Hinterschnitt
- 59: Skala
- 60: Ringsymbole
- 61: isolierten Drahtstück
- 62: abisolierten Drahtstück
- 63: Sperrhebel
- 64: Drehachse
- 65: Rastnocken
- 66: Stirnseite
- 67: Aussparung
- 68: Hinterer Zugstangenabschnitt
- 69: Federelement
- 70: Anschlag
- 71: Zugstangenende
- 72: Dämpfungsglied
- 73: Drehachse
- 74: Stirnseite
- 75: Gehäuse
- 76: Gehäuse
- 77: Stift
- 78: Bolzen
- 79: Ausnehmung

## Patentansprüche

1. Abisolierzange mit zwei Handhebeln (2, 3), einer Gehäuseschale (4) und einer relativ zu dieser schwenkbaren Klemmbacke (8), die mit dem vorderen Teil der Gehäuseschale (4) ein Zangenmaul (55) bildet, in welchem zwei relativ zueinander bewegliche Messerhalter (15, 16) mit je einem Abisoliermesser (12, 13) gelagert sind und die Messerhalter im Zangenmaul (55) von einer Zugstange (29) gehaltert sind, wobei die Messerhalter (15, 16) jeweils getrennt abnehmbar an der Zugstange (29) gehaltert sind, **dadurch gekennzeichnet, dass** das die Messerhalter (15, 16) haltende Ende der Zugstange (29) in Form einer zu den Messerhaltem (15, 16) hin offenen Drei ausgebildet ist und dass die Messerhalter (15, 16) an ihrem der Zugstange (29) zugewandten Ende mit einem Hinterschnitt (58) zum Verhaken der Messerhalter (15, 16) an den den Messerhaltern (15, 16) zugewandten Enden der offenen Drei der Zugstange (29) ausgebildet sind.

2. Abisolierzange nach Anspruch 1, **dadurch gekennzeichnet, dass** die Zugstange (29) parallel zur Zangenlängsachse verschiebbar ist.

3. Abisolierzange nach einem der vorhergehenden Ansprüche, **dadurch gekennzeichnet, dass** die Messerhalter (15, 16) parallel zur Zangenlängsachse verschiebbar sind.

4. Abisolierzange nach einem der vorhergehenden Ansprüche, **dadurch gekennzeichnet, dass** auf einem der Messerhalter (15) ein Leiteranschlag (14) gehaltert ist.

5. Abisolierzange nach Anspruch 4, **dadurch gekennzeichnet, dass** der Leiteranschlag (14) auf dem Messerhalter (15) gehaltert ist, der in dem vorderen Teil der Gehäuseschale (4) untergebracht ist.

6. Abisolierzange nach einem der vorhergehenden Ansprüche, **dadurch gekennzeichnet, dass** ein Handhebel (2) schwenkbar an der Gehäuseschale (4) gelagert ist.

7. Abisolierzange nach Anspruch 6, **dadurch gekennzeichnet, dass** der schwenkbare Handhebel (2) an seinem zangenkopfnahen Ende ein Schneidmesser (27) aufweist, das zusammen mit einem an der Gehäuseschale (4) angebrachten Schneidmesser (28) eine Schneidvorrichtung bildet.

8. Abisolierzange nach Anspruch 7, **dadurch gekennzeichnet, dass** die Gehäuseschale (4) im Bereich des Schneidmessers (28) als Rundmaul (48) geformt ist.

9. Abisolierzange nach Anspruch 8, **dadurch gekennzeichnet, dass** an der Gehäuseschale (4) ein Sperrhebel (63) schwenkbar angeordnet ist, der geeignet ist, das Rundmaul (48) zu verschließen.

10. Abisolierzange nach einem der vorhergehenden Ansprüche, **dadurch gekennzeichnet, dass** am vorderen Ende der Klemmbacke (4) und an der Spitze des Gehäuseschalenteils (4) je ein Klemmbackeneinsatz (9, 10) befestigt ist.

11. Abisolierzange nach Anspruch 10, **dadurch gekennzeichnet, dass** der Klemmbackeneinsatz (9) aus einem flächigen Andruckstück (53) und einem senkrecht auf der Fläche stehenden Steg (54) besteht, der in die Spitze der Klemmbacke (8) hineinragt.

12. Abisolierzange nach einem der vorhergehenden Ansprüche, **dadurch gekennzeichnet, dass** die Abisoliermesser (12, 13) als massive Klinge ausgebildet sind.

13. Abisolierzange nach einem der vorhergehenden Ansprüche, **dadurch gekennzeichnet, dass** die Abisoliermesser (12, 13) als Lamellensatz (56) ausgebildet sind.

## Claims

1. Stripping pliers, comprising two hand levers (2, 3), a housing shell (4) and a clamping jaw (8) which is pivotable relative to said shell and which forms a set of jaws (55) with the front part of the housing shell (4), in which two blade holders (15, 16) which can be moved relative to each other and which respectively comprise a stripping blade (12, 13) are mounted, and the blade holders in the set of jaws (55) are mounted by an actuating rod (29), wherein the blade holders (15, 16) are respectively detachably mounted on the actuating rod (29), **characterized in that** the end of the actuating rod (29) holding the blade holders (15, 16) is arranged in form of a three which is open towards the blade holders (15, 16), and that the blade holders (15, 16), at their end facing the actuating rod (29), are arranged with an undercut (58) for hooking the blade holders (15, 16) at the ends of the open three of the actuating rod (29) which face the blade holders (15, 16).

2. Stripping pliers according to claim 1, **characterized in that** the actuating rod (29) is displaceable parallel to the longitudinal axis of the pliers.

3. Stripping pliers according to one of the preceding claims, **characterized in that** the blade holders (15, 16) are displaceable parallel to the longitudinal axis of the pliers.

4. Stripping pliers according to one of the preceding claims, **characterized in that** a limit stop (14) for conductors is mounted on one of the blade holders (15).

5. Stripping pliers according to claim 4, **characterized in that** the limit stop (14) for conductors is mounted on the blade holder (15) which is housed in the front portion of the housing shell (4).

6. Stripping pliers according to one of the preceding claims, **characterized in that** a hand lever (2) is pivotably held on the housing shell (4).

7. Stripping pliers according to claim 6, **characterized in that** the pivotable hand lever (2) comprises a cutting blade (27) at its end close to the head of the pliers, which cutting blade forms a cutting apparatus together with a cutting blade (28) attached to the housing shell (4).

8. Stripping pliers according to claim 7, **characterized in that** the housing shell (4) is formed as a round mouth (48) in the region of the cutting blade (28).

9. Stripping pliers according to claim 8, **characterized in that** a locking lever (63) is pivotably arranged on the housing shell (4), which locking lever is capable of closing the round mouth (48).

10. Stripping pliers according to one of the preceding claims, **characterized in that** one respective clamping jaw insert (9, 10) is fastened to the front end of the clamping jaw (4) and to the tip of the housing shell part (4).

11. Stripping pliers according to claim 10, **characterized in that** the clamping jaw insert (9) consists of a flat pressing element (53) and a web (54) which stands perpendicularly to the surface and which protrudes into the tip of the clamping jaw (8).

12. Stripping pliers according to one of the preceding claims, **characterized in that** the stripping blades (12, 13) are arranged as massive blades.

13. Stripping pliers according to one of the preceding claims, **characterized in that** the stripping blades (12, 13) are arranged as a set of blades (56).

## Revendications

1. Pince à dénuder comportant deux leviers à main (2, 3), une coque de boitier (4) et une mâchoire de serrage (8) susceptible de pivoter par rapport à celle-ci, et qui forme avec la partie avant de la coque de boîtier (4) une gueule de pince (55) dans laquelle sont logés deux porte-couteaux (15, 16) mobiles l'un par rapport à l'autre et équipés chacun d'un couteau à dénuder (12, 13), et les porte-couteaux sont maintenus dans la gueule de pince (55) par une tige de traction (29), les porte-couteaux (15, 16) étant respectivement maintenus sur la tige de traction (29) en pouvant être extraits séparément,
**caractérisée en ce que**
l'extrémité de la tige de traction (29) maintenant les porte-couteaux (15, 16) est réalisée sous la forme d'un trois ouvert vers les porte-couteaux (15, 16), et les porte-couteaux (15, 16) sont réalisés à leur extrémité tournée vers la tige de traction (29) avec une contre-dépouille (58) pour permettre d'ancrer les porte-couteaux (15, 16) sur les extrémités du trois ouvert de la tige de traction (29) tournées vers les porte-couteaux (15, 16).

2. Pince à dénuder conforme à la revendication 1,
**caractérisée en ce que**
la tige de traction (29) peut coulisser parallèlement à l'axe longitudinal de la pince.

3. Pince à dénuder conforme à l'une des revendications précédentes,
**caractérisée en ce que**
les porte-couteaux (15, 16) peuvent coulisser parallèlement à l'axe longitudinal de la pince.

4. Pince à dénuder conforme à l'une des revendications précédentes,
**caractérisée en ce qu'**
une butée conductrice (14) est fixée sur l'un des porte-couteaux (15).

5. Pince à dénuder conforme à la revendication 4,
**caractérisée en ce que**
la butée conductrice (14) est montée sur le porte-couteaux (15) qui est situé à la partie avant de la coque de boîtier (4).

6. Pince à dénuder conforme à l'une des revendications précédentes,
**caractérisée en ce qu'**
un levier à main (2) est monté pivotant sur la coque de boîtier (4).

7. Pince à dénuder conforme à la revendication 6,
**caractérisée en ce que**
le levier à main pivotant (2) comporte, à son extrémité proche de la tête de pince, un couteau de coupe (27) qui forme, un dispositif de coupe avec un couteau de coupe (28) monté sur la coque de boîtier (4).

8. Pince à dénuder conforme à la revendication 7,
**caractérisée en ce que**
la coque de boîtier (4) est réalisée sous la forme d'une gueule circulaire (48) dans la zone du couteau de coupe (28).

9. Pince à dénuder conforme à la revendication 8,
**caractérisée en ce que**
sur la coque de boîtier (4) est monté pivotant un levier d'arrêt (63) qui est susceptible de fermer la gueule circulaire (48).

10. Pince à dénuder conforme à l'une des revendications précédentes,
**caractérisée en ce qu'**
à l'extrémité avant de la mâchoire de serrage (4) et sur la pointe de la partie de coque de boîtier (4) est respectivement fixé un insert de mâchoire de serrage (9, 10).

11. Pince à dénuder conforme à la revendication 10,
**caractérisée en ce que**
l'insert de mâchoire de serrage (9) est constitué par une pièce de compression plane (53) et une barrette (54) perpendiculaire à la surface de cette pièce qui pénètre dans la pointe de la mâchoire de serrage (8).

12. Pince à dénuder conforme à l'une des revendications précédentes,
**caractérisée en ce que**
les couteaux à dénuder (12, 13) sont réalisés sous la forme de lames massives.

13. Pince à dénuder conforme à l'une des revendications précédentes,
**caractérisée en ce que**
les couteaux à dénuder (12, 13) sont réalisés sous la forme de jeux de lamelles (56).
